# EUROPEAN PATENT SPECIFICATION

(11) **EP 3 675 215 B1**
(45) Date of publication and mention of the grant of the patent: **23.11.2022**
(21) Application number: 19205782.6
(22) Date of filing: 29.10.2019
(51) Int. Cl.: B60L 50/64, H01M 50/209, H01M 50/242, H01M 50/249, H01M 50/258, H01M 50/264, H01M 50/289, H01M 50/502, H01M 50/543

(54) **BATTERY PACK AND VEHICLE**
BATTERIEPACK UND FAHRZEUG
BLOC BATTERIE ET VÉHICULE

(30) Priority: 30.12.2018 CN 201811649786
(43) Date of publication of application: 01.07.2020
(73) Proprietor: Contemporary Amperex Technology Co., Limited, Jiaocheng District Ningde City Fujian 352100 (CN)
(72) Inventor: SHI, Dongyang, Ningde City, Fujian 352100 (CN); CHEN, Xingdi, Ningde City, Fujian 352100 (CN); ZHOU, Linggang, Ningde City, Fujian 352100 (CN); WANG, Peng, Ningde City, Fujian 352100 (CN); LIN, Yongshou, Ningde City, Fujian 352100 (CN); XIANG, Yanhuo, Ningde City, Fujian 352100 (CN)
(74) Representative: Ran, Handong

(56) References cited:
- EP-A1- 3 096 390
- EP-A1- 3 349 269
- CN-U- 207 896 164
- DE-A1-102013 203 204
- JP-A- 2013 008 521
- US-A1- 2016 056 425
- US-A1- 2016 056 430

## Description

### TECHNICAL FIELD

The present disclosure generally relates to the field of energy storage devices, and in particular, to a battery pack and a vehicle.

### BACKGROUND

A secondary battery has advantages of high energy density, long service life, energy saving and being environmentally friendly, and is widely used in various fields such as new energy vehicles.

A plurality of battery cells are usually stacked together and electrically connected to each other through bus bars to form a battery module, then a plurality of battery modules are assembled in a housing and electrically connected to each other through wires to form a battery pack, and the battery pack is electrically connected to a driving motor of a new energy vehicle. Some traffic accidents such as rollovers and side impacts are almost inevitable during driving, and these traffic accidents may cause deformation of a side surface of the battery pack on the vehicle. The housing of the battery pack is usually made of a conductive metal, and is easily collapsed into an interior of the battery pack when hit by an impact, which may cause a short circuit due to the electrical connection between some charged parts in the battery pack and the housing, which may cause serious consequences, such as fire, explosion of the battery pack, and the like.

DE 10 2013 203204 A1 discloses a battery pack including a first battery module and a second battery module, the first and second battery modules include a plurality of cell connectors, and the first and second battery modules are arranged in such manner that the cell connectors of the first and second battery modules face each other. The cell connectors of the first and second battery modules are arranged at least partially opposite another and thereby through an air gap or between them horizontal cell connectors arranged electrical insulator are spaced. DE 10 2013 203204 A1 does not disclose that the battery pack further includes a third battery module, let alone how the third battery module is arranged in the battery pack with the first and second battery modules.

JP 2013 008521A discloses that the battery pack includes a plurality of first battery modules 12 arranged along the same direction (one of the first battery modules 12 is arranged at one end of the battery pack), a second battery module 12, 12B arranged at the other end of the battery pack, and a third battery module 12, 12A arranged between the plurality of first battery modules 12 and the second battery module 12, 12B. First of all, such design of D5 not only significantly increases the cost of insulation protection of the electrode terminals of the battery cells, but also increases the risk that one housing of two adjacent first battery modules 12 will come into contact with the electrode terminals of the other, thereby increasing the risk of short circuit in the battery pack.

### SUMMARY

In a first aspect, some embodiments of the present disclosure provide a battery pack, including
a housing including accommodating chamber; and
a plurality of battery modules disposed in the accommodating chamber and arranged in a horizontal direction;
each of the battery modules includes a plurality of battery cells electrically connected to each other by a plurality of first bus bars;
each of the battery cells includes a battery case having a first surface, a first and a second electrode terminals disposed on the first surface of the battery case;
the plurality of the battery modules include a first battery module arranged at one end of the battery pack along the horizontal direction, a second battery module arranged at the other end of the battery pack along the horizontal direction, and a third battery module arranged between the first battery module and the second module; and
each of the first and the second electrode terminals of the battery cells in the first battery module face toward the second battery module, and each of the first and the electrode terminals of the battery cells in the second battery module face toward the first battery module; and
the battery case further having a fourth surface facing the first surface;
optionally, the number of the battery modules is an even number, two first surfaces of the battery case in any two adjacent battery modules face each other, or two fourth surfaces of the battery case in any two adjacent battery modules face each other; or,
optionally, the number of the battery modules is an odd number, two first surfaces of the battery case in any two adjacent battery modules except the third battery module face each other, or two fourth surfaces of the battery case in any two adj acent battery modules except the third battery module face each other.

In some embodiments of the present disclosure, a dimension of the battery case in the horizontal direction is larger than a dimension of the battery case in a vertical direction.

In some embodiments of the present disclosure, the battery case further having two second surfaces and two third surfaces, an area of the second surface is larger than an area of the first surface and also larger than an area of the third surface, the two second surfaces face each other in the vertical direction, the two third surfaces face each other in the horizontal direction, and any two of the first surfaces, the second surfaces, and the third surfaces are connected to each other.

In some embodiments of the present disclosure, the horizontal direction is a width direction of the battery pack, or the horizontal direction is a length direction of the battery pack.

In some embodiments of the present disclosure, the battery case further includes a fourth surface facing the first surface; the number of the plurality of battery modules is an odd number, the first surfaces of the battery case in any two adjacent battery modules except the third battery module face each other, or the fourth surfaces of the battery case in any two adjacent battery modules except the third battery module face each other; in other words, for any two adjacent battery modules except the third battery module, the first surface of the battery case in one battery module and the first surface of the battery case in the other battery module face each other, or the fourth surface of the battery case in one battery module and the fourth surface of the battery case in the other battery module face each other.

In some embodiments of the present disclosure, a partition plate is disposed between the any two adjacent battery modules. Specifically, the partition plate is disposed between the two first surfaces of the battery case of the any two adjacent battery modules, or the partition plate is disposed between the two fourth surfaces of the battery case of the any two adjacent battery modules.

In some embodiments of the present disclosure, the plurality of battery modules is be electrically connected to each other by a plurality of second bus bars, and the plurality of the second bus bars are located at the same end of the battery modules.

In some embodiments of the present disclosure, the battery modules further includes a tying band, which surrounds an outer periphery of the plurality of battery cells. The tying band includes a long side and a short side, the long side faces a top surface or a bottom surface of the battery module and extends in the horizontal direction, and the short side faces a side surface of the battery module and extends in the vertical direction.

In some embodiments of the present disclosure, the battery modules further includes two end plates, which are respectively disposed at two ends of the plurality of battery cells; and the tying band surrounds the outer periphery of the plurality of battery cells and the two end plates.

In some embodiments of the present disclosure, two or three battery cells are stacked in a vertical direction in each of the battery module.

In a second aspect, some embodiments of the present disclosure provides a vehicle including a vehicle body and the battery pack as described above, and the battery pack is disposed at a bottom of the vehicle body. The first battery module and the second battery module in the battery pack are respectively arranged on two sides in a width direction of the vehicle body, or, the first battery module and the second battery module in the battery pack are respectively arranged on two sides in a length direction of the vehicle body.

According to the battery pack of the present disclosure, since the plurality of the battery modules are disposed therein in a specific arrangement, even if the side surface of the battery pack is impacted, a probability that an inner wall of the housing contacts the first and the second electrode terminals in the battery module can be reduced, thereby effectively reducing the risk of short circuit of the battery pack and improving the safety of the battery pack.

### BRIEF DESCRIPTION OF DRAWINGS

In order to facilitate a full understanding of the present disclosure, reference is now made to the accompanying drawings, in which like elements are referenced with like numerals. These drawings should not be construed as limiting the present disclosure, but are intended to be illustrative only. The drawings are not necessarily to scale, or inclusive of all elements of a device, emphasis instead generally being placed upon illustrating the concepts, structures, and techniques sought to be protected herein.
FIG. 1 is an exploded view of a battery pack according to an embodiment of the present disclosure.
FIG. 2 is an exploded view of a battery pack according to another embodiment of the present disclosure.
FIG. 3 is an exploded view of a battery pack according to another embodiment of the present disclosure.
FIG. 4 is an exploded view of a battery pack according to another embodiment of the present disclosure.
FIG. 5 is an exploded view of a battery pack according to another embodiment of the present disclosure.
FIG. 6 is a schematic view showing a positional relationship between a partition plate and a battery module according to an embodiment of the present disclosure.
FIG. 7 is a schematic structural view of a battery module according to an embodiment of the present disclosure.
FIG. 8 is a schematic structural view of a battery cell according to an embodiment of the present disclosure.
FIG. 9 is an exploded view of a battery cell according to an embodiment of the present disclosure.
FIG. 10 is a cross-sectional view of an electrode assembly of a wound structure according to an embodiment along D-D direction as shown in FIG. 9.
FIG. 11 is a schematic view of the outline a cross section of an electrode assembly of a wound structure according to an embodiment along D-D direction as shown in FIG. 9.
FIG. 12 is a cross-sectional view of an electrode assembly of a laminated structure according to an embodiment along D-D direction as shown in FIG. 9.
FIG. 13 is a schematic structural view of a battery module according to an embodiment of the present disclosure.
FIG. 14 is an exploded view of the battery module shown in FIG. 13.
FIG. 15 is a schematic structural view of an end plate according to an embodiment of the present disclosure.

List reference signs of the drawing:
100, battery module;
100-1, first battery module;
100-2, second battery module;
100-3, third battery module;
100-4, fourth battery module;
1, battery cell;
11, electrode assembly;
12, battery case;
13, cover assembly;
131, first electrode terminal;
132, second electrode terminal;
14, adapter piece;
111, first electrode sheet;
112, second electrode sheet;
113, separator;
114, flat face;
115, narrow face;
110, first surface;
120, second surface;
130, third surface;
140, fourth surface;
200, battery pack;
20, housing;
210, upper housing cover;
220, lower housing body;
250, accommodating chamber;
2, end plate;
21, main body of the end plate;
22, tying band limiting slot;
3, tying band;
31, long side;
32, short side;
4, insulation part;
5, first bus bar;
6, second bus bar; and
7, partition plate.

### DETAILED DESCRIPTION

The battery pack and vehicle according to the present disclosure will be further described in detail below with reference to the accompanying drawings.

To describe in detail the technical contents, structural features, objects and technical effects of the present disclosure, a detailed description in conjunction with the specific embodiments and accompanying drawings is provided below.

In the description of the present disclosure, the terms "first" and "second" are used for descriptive purposes only, and should not be construed as indicating or implying the relative importance thereof, unless otherwise specified or explained. The term "a plurality of" means two or more; the terms "connected", "fixed" and the like should be understood broadly. For example, "connected" may be a fixed connection, or a detachable connection, or an integral connection, or an electrical connection; it may be directly connected or indirectly connected though an intermediate medium. For a person of ordinary skill in the art, the specific meanings of the above terms in the present disclosure may be understood in their specific contexts.

In the description of the present disclosure, the direction indicated by arrow A in all the drawings is the length direction, the direction indicated by arrow B is the width direction, and the direction indicated by arrow C is the vertical direction. The horizontal direction is a direction parallel to a horizontal plane, and may be the length direction or the width direction. In addition, the horizontal direction includes not only the direction that is absolutely parallel to the horizontal plane, but also the direction generally parallel to the horizontal plane as conventionally recognized in engineering. The vertical direction is a direction perpendicular to the horizontal plane, and the vertical direction includes not only the direction absolutely perpendicular to the horizontal plane, but also the direction generally perpendicular to the horizontal plane as conventionally recognized in engineering. In addition, the terms "upper", "lower", "top", "bottom" and the like are understood relative to the vertical direction.

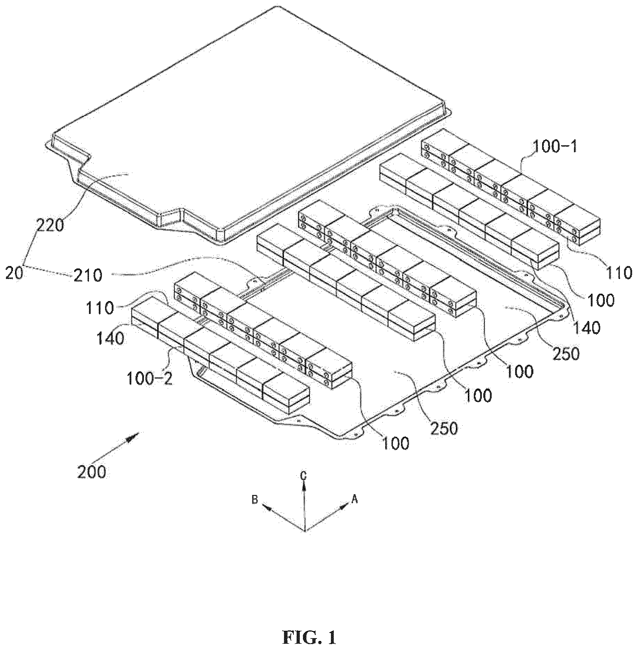

In an embodiment of the present disclosure, a vehicle is provided, the vehicle includes a vehicle body and a battery pack, and the battery pack is disposed in the vehicle body. The battery pack is the battery pack 200 illustrated in any one of FIG. 1 to FIG. 5, in which battery pack 200 is disposed at the bottom of the vehicle body. A first battery module 100-1 and a second battery module 100-2 of a plurality of battery modules 100 are respectively arranged at two ends in a width direction of the vehicle body. Alternatively, the first battery module 100-1 and the second battery module 100-2 of the plurality of battery modules 100 are arranged at two ends in a length direction of the vehicle body. It should be noted that the length direction of the vehicle body and the width direction of the vehicle body may be for a vehicle during normal operational positions. The length direction of the vehicle body may refer to a direction from a front end toward a rear end of the vehicle. The width direction of the vehicle body may refer to a direction from one side toward the other side of the vehicle. The length direction of the vehicle body and the width direction of the vehicle body are both substantially parallel to the horizontal plane.

The vehicle may be a new energy vehicle, which may be an electric vehicle, a hybrid vehicle or a range extended electric vehicle (REEV). A driving motor is arranged in the main body of the vehicle, and the driving motor may be electrically connected with the battery pack 200. The battery pack 200 provides electric energy to the driving motor, and the driving motor is connected to the wheels of the vehicle body via a transmission mechanism, so as to drive the vehicle to move. In some embodiments of the present disclosure, the battery pack 200 may be horizontally disposed at the bottom portion of the vehicle main body.

FIG. 1 shows an exploded view of the battery module 200 according to an embodiment of the present disclosure. The battery pack 200 is disposed at the bottom of the vehicle main body, the first battery module 100-1 is arranged at one end in the length direction of the vehicle body, and the second battery module 100-2 is arranged at the other end in the length direction of the vehicle body. The length direction of the vehicle body is the direction indicated as direction A as shown in FIG. 1. The width direction of the vehicle body is the direction indicated as the direction B as shown in FIG. 1.

Referring to FIG. 1, FIG. 2 and FIG. 3, which are the exploded views of the battery pack 200 according to some embodiments of the present disclosure, the battery pack 200 includes a housing 20 and a plurality of battery modules 100, where the housing 20 includes an upper housing cover 220 and a lower housing body 210. The lower housing body 210 is sealed with the upper housing cover 220 to form a sealed housing having an accommodating chamber 250, and the plurality of the battery modules 100 are arranged in the accommodating chamber 250. The housing 20 may be made of metal or non-metal materials. Exemplary metal materials to make the housing 20 may include, but not limited to, aluminum and aluminum alloy.

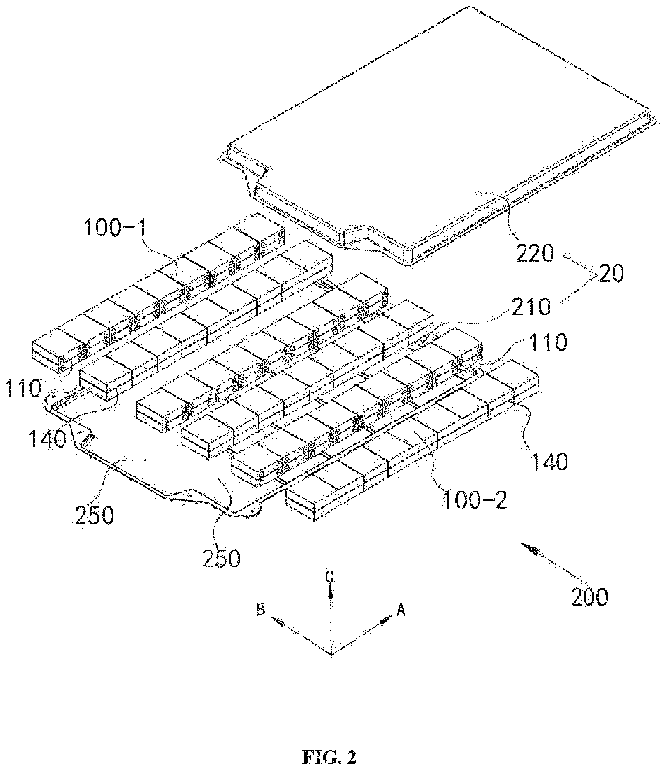

Referring to FIG. 1, FIG. 2 and FIG. 3, the plurality of the battery modules 100 are disposed in the accommodating chamber 250 of the housing 20, and the plurality of the battery modules 100 may be arranged in the horizontal direction. That is, it may be the length direction as indicated by arrow A, or it may be the width direction as indicated by the arrow B. For example, in FIG. 1, the plurality of the battery modules 100 are arranged in the direction indicated by arrow A, where the direction indicated by arrow A is the length direction of the vehicle body. In FIG. 2, the plurality of the battery modules 100 is arranged in the direction indicated by arrow B, where the direction indicated by arrow B is the width direction of the vehicle body. Among the plurality of the battery modules 100, the battery module 100 located at one end of the battery pack in the horizontal direction is defined as a first battery module 100-1, the battery module 100 located at the other end of the battery pack in the horizontal direction is defined as second battery module 100-2. For example, in FIG. 1, the first battery module 100-1 is arranged at one end of the battery pack in the direction indicated by arrow A, and the second battery module 100-2 is arranged at the other end of the battery pack in the direction indicated by arrow A. In FIG. 2, the first battery module 100-1 is arranged at one end of the battery pack in the direction indicated by arrow B, and the second battery module 100-2 is arranged at the other end of the battery pack in the direction indicated by arrow B.

Each of first electrode terminals 131 and each of second electrode terminals 130 in the first battery module 100-1 are oriented toward the second battery module 100-2; in addition, each of the first electrode terminals 131 and each of the second electrode terminals 130 in the second battery module 100-2 are oriented toward the first battery module 100-1. In other words, all of the first electrode terminal 131 and the second electrode terminal 132 in the first battery module 100-1 and in the second battery module 100-2 are oriented toward a middle portion of the battery pack.

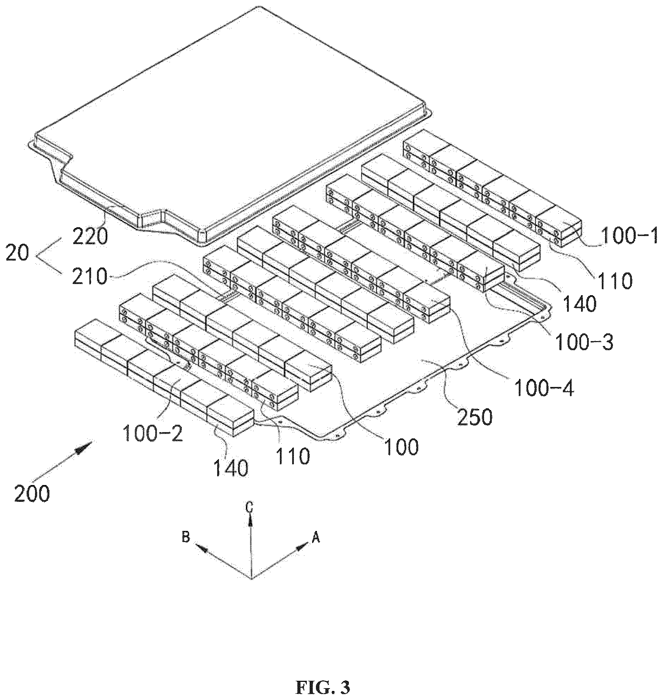

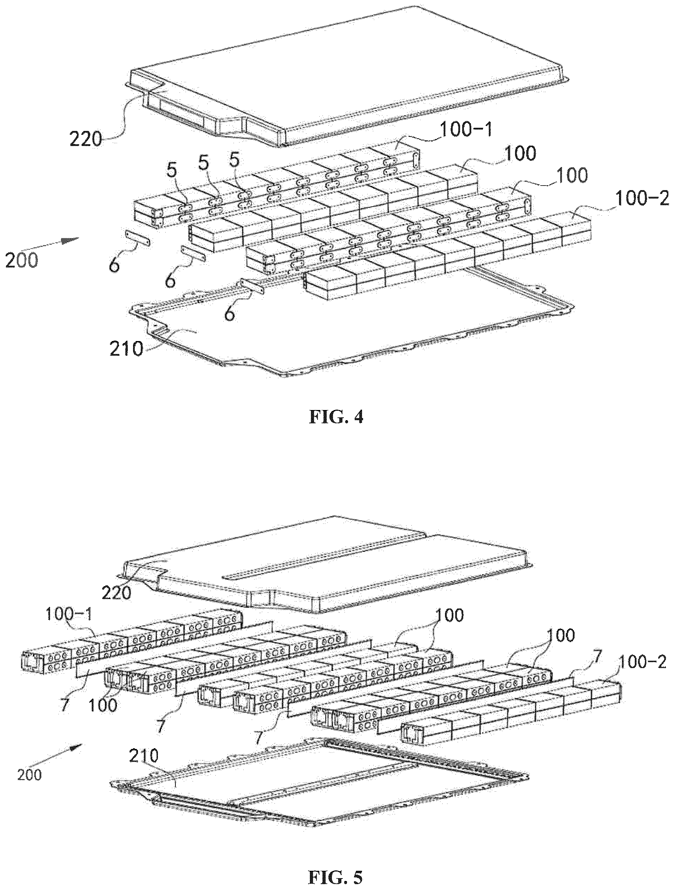

Similarly, in some embodiments of the present disclosure shown in FIG. 3 and FIG. 4, the first electrode terminal 131 and the second electrode terminal 132 in first battery module 100-1 are both oriented toward the second battery module 100-2, and the first electrode terminal 131 and the second electrode terminal 132 in second battery module 100-2 are both oriented toward the first battery module 100-1.

In some embodiments of the present disclosure, all of the electrode terminals in the first battery module 100-1 and the second battery module 100-2 arranged at two ends of the battery pack 200 in the horizontal direction are both oriented toward the middle portion of battery pack 200, such that even if when a side surface of the battery pack 200 is impacted, there is still a reduced probability for the inner wall of the housing 20 to contact the first electrode terminals 131 and the second electrode terminals 132 in battery module 100, thereby effectively reducing the risk of short circuit of the battery pack, and also improving the safety of the battery pack.

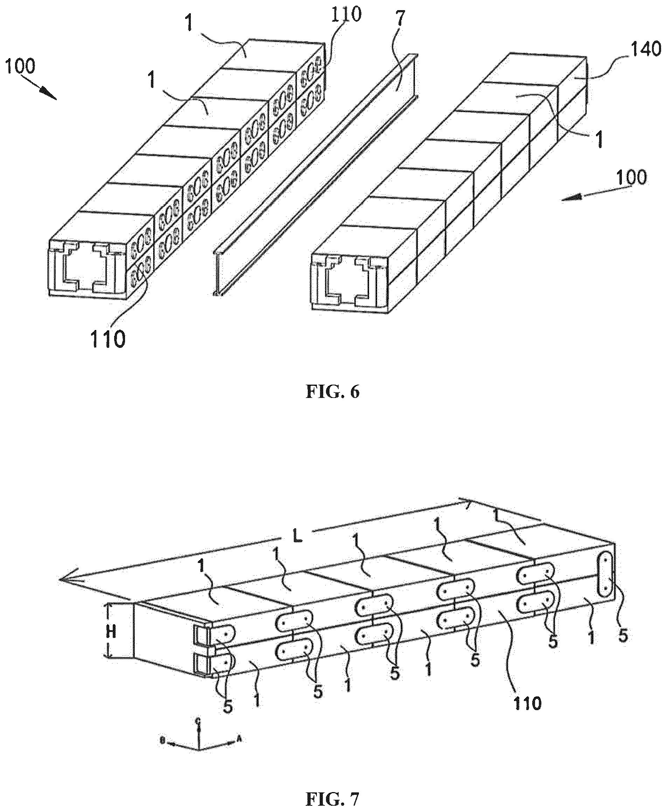

Referring to FIG. 6, in some embodiments of the present disclosure, a partition plate 7 is disposed between any two adjacent battery modules 100 in the battery pack 200. Specifically, a partition plate 7 is disposed between a side surface where the first electrode terminal 131 and the second electrode terminal 132 are located for any two adjacent battery modules 100. The Partition plate 7 may be made of an insulating and high temperature resistant material, including, but not limited to an asbestos plate and a mica plate. When the battery pack 200 is impacted, the partition plate 7 can prevent the first electrode terminal 131 and the second electrode terminal 132 of the any two adjacent battery modules 100 from being short-circuited, thereby further improving the safety of the battery pack.

Referring to FIG. 7, it shows a schematic structural view of the battery module 100 according to an embodiment of the present disclosure. The battery module 100 includes a plurality of battery cells 1 arranged in the horizontal direction (for example, the direction indicated by arrow A) and a plurality of first bus bars 5 electrically connected to the plurality of the battery cells 1. The battery cell 1 may be a secondary battery that may be repeatedly charged and discharged, and the plurality of the battery cells 1 are connected in series, in parallel, or a mixed connection through a plurality of the first bus bars 5. In some embodiments of the present disclosure, the battery module 100 further includes a plurality of the battery cells 1 arranged in the vertical direction. A dimension L of the battery module 100 in the horizontal direction is larger than a dimension H of battery module 100 in the vertical direction, that is, for the battery module 100 shown in FIG. 7, the dimension L of in the direction indicated by arrow A is larger than the dimension H in the direction indicated by arrow C.

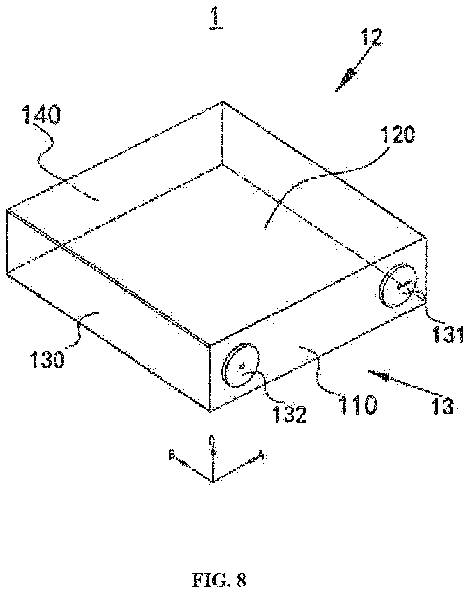

Referring to FIG. 8, it shows a structure of the battery cell 1 according to an embodiment of the present disclosure. The battery cell 1 includes a battery case 12, the first electrode terminal 131 and the second electrode terminal 132. The first electrode terminal 131 and the second electrode terminal 132 are both disposed on a first surface 110 of the battery case 12. The battery case 12 may be made of a metal material or non-metal material. Exemplary metal material may include, but not limited to, aluminum, aluminum alloy, and nickel-plated steel. In some embodiments of the present disclosure, the battery case 12 may have a rectangular box shape. The first electrode terminal 131 may be a positive electrode terminal, and the second electrode terminal 132 may be a negative electrode terminal. In some embodiments of the present disclosure, the first electrode terminal 131 may be a negative electrode terminal, and the second electrode terminal 132 may be a positive electrode terminal.

The type of battery cell (battery for short) may include, but is not limited to, lithium ion battery, aluminum ion battery, carbon battery, flow battery, lead-acid battery, glass battery, magnesium ion battery, metal air battery, molten salt battery, nickel cadmium battery, nickel hydrogen battery, nickel iron battery, nickel metal hydride battery, nickel zinc battery, organic radical battery, polymer-based battery, fuel cell, lithium sulfur battery, sodium ion battery, sodium sulfur battery, and zinc ion battery. In some embodiments of the present disclosure, the battery is a lithium ion battery.

Referring to FIG. 1, FIG. 2 and FIG. 4, the battery pack 200 has an even number of the battery modules 100 including a first battery module 100-1 and a second battery module 100-2. Each of the battery modules 100 includes a plurality of battery cells 1 electrically connected to each other by a plurality of first bus bars 5. The Battery case 12 of the battery cell 1 includes the first surface 110 provided with the first electrode terminal 131 and the second electrode terminal 132, and a fourth surface 140 facing the first surface 110. The positional relationship of the first surface 110 and the fourth surface 140 of the battery case 12 may be seen in reference to the battery cell structure as shown in FIG. 8. Referring to FIG. 1, for any two adjacent battery modules 100, the first surface 110 of one battery module 100 faces the first surface 100 of the other battery module 100, or the fourth surface 140 of one battery module 100 faces the fourth surface 140 of another battery module 100.

In the battery pack shown in FIG. 1, FIG. 2 and FIG. 4, the first surface 110 of one battery module 100 faces the first surface 110 of an adjacent battery module 100, on the one hand, it is convenient for any two adjacent battery modules 100 to be electrically connected by the bus bar, and on the other hand, it can facilitate insulation protection for the charged parts such as the first electrode terminal 131, the second electrode terminal 132 and the first bus bar 5 and the like. Insulation can be achieved by providing only one partition plate 7 between the any two adjacent battery modules 100, thereby reducing a number of the partition plates 7 used and increasing the energy density of the battery pack.

Referring to FIG. 3, the battery pack 200 has an odd number of the battery modules 100 including the first battery module 100-1 and the second battery module 100-2. Similarly, each of the battery modules 100 includes a plurality of battery cells 1 electrically connected to each other by a plurality of first bus bars 5, the battery case 12 of the battery cell 1 includes the first surface 110 and the fourth surface 140 facing the first surface 110.

To facilitate the description of how an odd number of the battery modules 100 are arranged, in FIG. 3, one of the battery modules located in the middle of the battery pack but not adjacent to the first battery module and the second battery module is designated as a third battery module 100-3, and another battery module located in the middle of the battery pack is designated as a fourth battery module 100-4. As may be seen from FIG. 3, in addition to the third battery module 100-3, the other battery modules 100 may all achieve as follows: for any two adjacent battery modules 100, the first surface 110 of one battery module 100 and the first surface 110 of the other battery module 100 may face each other, or the fourth surface 140 of one battery module 100 and the fourth surface 140 of another battery module 100 may face each other. And for the third battery 100-3, the first surface thereof faces the fourth surface of an adjacent battery module, and the fourth surface thereof faces the first surface of an adjacent battery module.

In the battery pack shown in FIG. 3, the first surface 110 of one battery module 100 may be made to face the first surface 110 of an adjacent battery module 100 as much as possible. Therefore, on the one hand, it facilitates the electrical connection between two adjacent battery modules 100; on the other hand, it also facilitates the insulation and protection of the charged parts such as the first electrode terminal 131, the second electrode terminal 132 and the first bus bar 5 and the like; moreover, the insulation can be achieved for the two adjacent battery modules 100 by providing only one partition plate 7 therebetween, thereby reducing the number of partition plates 7 and improving the energy density of the battery package.

In the battery cell 1, since an explosion-proof valve can be generally disposed on the same end surface (that is, the first surface 110) with the first electrode terminal 131 and the second electrode terminal 132, the partition plate 7 may be also arranged between two explosion-proof valves of two adjacent battery modules 100. By providing the partition plate 7, high-temperature flame generated when the explosion-proof valve of the battery cell 1 bursts can be prevented from directly acting onto the battery cell 1 on the opposite side, thereby avoiding the thermal runaway of the entire battery pack and improving the safety of the battery pack 200.

The partition plate 7 according to an embodiment of the present disclosure may be made of a mica plate. Since the mica plate has good insulation performance and a high melting point (1723 °C), the fire-resistance requirement can be achieved. In addition, the mica plate has excellent processing properties. Other insulating high temperature resistant materials are also contemplated for the partition plate 7 according to another embodiment of the present disclosure. In an embodiment of the present disclosure, the any two adjacent battery modules 100 can share one partition plate 7, which can reduce the number of partition plates 7 used, thereby further increasing the energy density of the battery package 200.

Referring to FIG.8, the battery cell 1 may be substantially a hexahedral structure, including the battery case 12. The battery case 12 includes the first surface 110, the fourth surface 140, two second surfaces 120, and two third surfaces 130. The first surface 110 and the fourth surface 140 are substantially parallel to each other, and both are substantially parallel to the vertical direction. The first electrode terminal 131 and the second electrode terminal 132 are disposed on the first surface 110. The fourth surface 140 faces the first surface 110, and the two second surfaces 120 face each other. The two third surfaces 130 face each other and are substantially parallel to the vertical direction. Any two of the third surface 130, the first surface 110 and the second surface 120 are connected to each other, which are further perpendicular to each other. An area of the second surface 120 is larger than an area of the first surface 110 and also is larger than an area of the third surface 130.

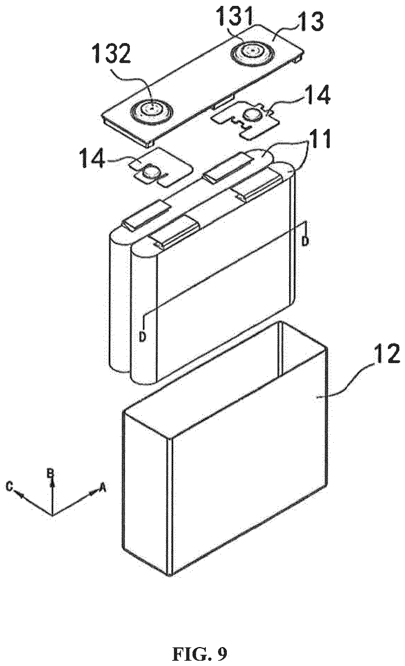

Referring to FIG. 9, the battery cell 1 includes the battery case 12 and an electrode assembly 11. In an embodiment of the present disclosure, the battery case 12 may have a hexahedral shape or other shape, and may have an opening. The electrode assembly 11 is accommodated in the battery case 12. The opening of the battery case 12 is covered with a cover assembly 13. The cover assembly 13 includes a cover plate and electrode terminals disposed on the cover plate, the electrode terminals includes the first electrode terminal 131 and the second electrode terminal 132, in which the first electrode terminal 131 may be a positive electrode terminal, and the second electrode terminal 132 may be a negative electrode terminal. In an embodiment of the present dislcosure, the first electrode terminal 131 may be a negative electrode terminal, and the second electrode terminal 132 may be a positive electrode terminal. The cover plate may be made of metal material or non-metal materials. Exemplary metal materials may include, but not limited to aluminum and aluminum alloy, and a size of the cover plate may be adapted to a size of the opening of the battery case 12. The electrode terminals may be fixed to the cover plate by means of welding or by a fixing member such as a rivet. The tabs of the electrode assembly 11 may be electrically connected to the electrode terminals on the cover plate through an adapter piece 14. In an embodiment of the present disclosure, there may be two adapter pieces 14, which may be respectively a positive electrode adapter and a negative electrode adapter.

FIG. 9 shows two electrode assemblies 11 is provided in the battery case 12, and the two electrode assemblies 11 are stacked in the vertical direction (the direction indicated by arrow C). In an embodiment of the present disclosure, a number of the electrode assemblies disposed in battery case 12 may be about one, two, three, four, or five. In an embodiment of the present disclosure, the number of electrode assemblies disposed in the battery case 12 may be equal to or more than about six. A plurality of the electrode assemblies may be stacked in the vertical direction (the direction indicated by arrow C).

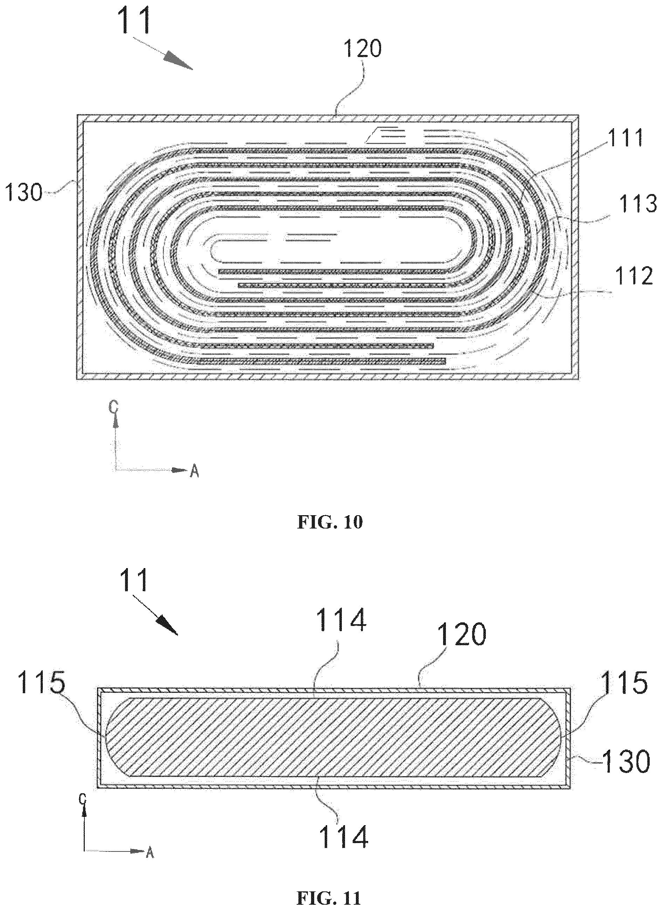

Referring to FIG. 10, FIG. 11, and FIG. 12, the electrode assembly 11 includes a first electrode sheet 111, a second electrode sheet 112, and a separator 113 disposed between the first electrode sheet 111 and the second electrode sheet 112. The first electrode sheet 111 may be a positive electrode piece and the second electrode sheet 112 may be a negative electrode piece. In an embodiment of the present disclosure, the first electrode sheet 111 may be a negative electrode piece, and the second electrode sheet may be a positive electrode piece. The separator 113 may be an insulator provided between the first electrode sheet 111 and the second electrode sheet 112. An active material of the positive electrode sheet may be coated on the coating area of the positive electrode sheet, and an active material of the negative electrode sheet may be applied onto the coating area of the negative electrode sheet. A portion extending from the coating area of the positive electrode sheet may serve as a positive tab; a portion extending from the coating area of the negative electrode sheet may serve as a negative tab. The positive tab may be connected to the positive electrode terminal on the cover assembly 13 through the positive electrode adapter piece, and similarly, the negative tab may be connected to the negative electrode terminal on the cover assembly 13 through the negative electrode adapter piece.

Referring to FIG. 10, is shows an electrode assembly 11 having a wound structure. The first electrode sheet 111, the separator 113, and the second electrode sheet 112 are strip-shaped structures. The first electrode sheet 111, the separator 113, and the second electrode sheet 112 may be sequentially laminated and wound two or more times to form the electrode assembly 11. In addition, the electrode assembly 11 may be in a flat shape. When the electrode assembly 11 is fabricated, the electrode assembly 11 may be first wound into a hollow cylindrical structure, and then flattened by pressure after being wound.

Referring to FIG. 11, it shows an outline of the electrode assembly 11. An outer surface of the electrode assembly 11 may include two flat faces 114, and the two flat faces 114 face each other in the vertical direction (the direction indicated by arrow C), that is, the flat faces 114 and the first surface 110 of battery case 12 is oppositely arranged. The electrode assembly 11 may be substantially a hexahedral structure, and the flat face 114 may be substantially parallel to the winding axis and is an outer surface having the largest area. The flat face 114 may be a relatively flat surface and is not required to be an absolutely flat surface. The two flat faces 114 may be referred to in terms of narrow faces 115 on two sides of the electrode assembly 11; in addition, an area of the flat face 114 is larger than that of the narrow face 115 of the electrode assembly 11.

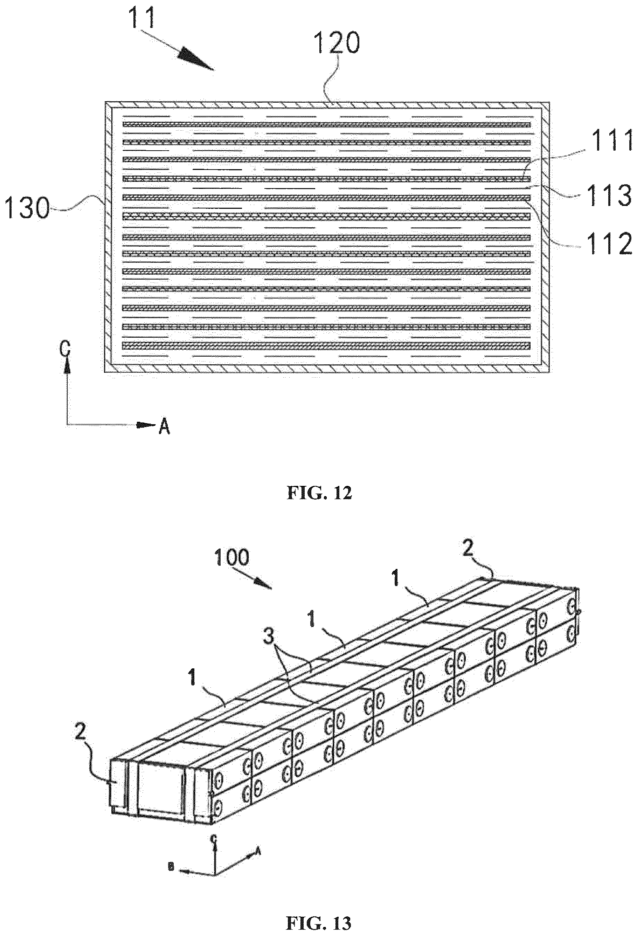

Referring to FIG. 12, it shows an electrode assembly 11 having a laminated structure. The electrode assembly 11 has a plurality of the first electrode sheet 111 and a plurality of the second electrode sheet 112, and the separator 113 may be disposed between the first electrode sheet 111 and the second electrode sheet 112. The first electrode sheet 111, the separator 113, and the second electrode sheet 112 are stacked sequentially. Among them, the first electrode sheet 111, the separator 113, and the second electrode sheet 112 are stacked in the vertical direction (the direction indicated by arrow C).

Since the electrode assembly 11 will inevitably expand in a thickness direction of the electrode sheet during the processes of charging and discharging, in the electrode assembly 11 having the wound structure, the expansion force is the largest in a direction perpendicular to the flat face 114, while in the electrode assembly 11 having the laminated structure, the expansion force is the largest in a stacking direction of the first electrode sheet 111 and the second electrode sheet 112.

In the existing technologies, in the battery cells 1 of the battery module 100, a direction in which the electrode assembly 11 applies the largest expansion force to the battery case 12 is toward the horizontal direction. A dimension of the battery module 100 in the horizontal direction is much larger than a dimension thereof in the vertical direction. For example, limited by a chassis height dimension of a vehicle, more battery cells 1 need to be stacked in the horizontal direction and the expansion force is thus accumulated in this direction. Therefore, the expansion force of current battery modules 100 in the horizontal direction may be very large, so it is necessary to provide thick end plates on both sides of the battery modules 100 in the horizontal direction to resist the expansion force. However, an increase in the thickness of the end plate with bigger weight will reduce the energy density of the battery modules 100. In some embodiments of the present disclosure, the electrode assembly 11 may be of a wound structure or a laminated structure. In the case where the electrode assembly 11 is of a wound structure, the flat face 114 may face towards the vertical direction. In the case where the electrode assembly is of a laminated structure, the first electrode sheet 111 and the second electrode sheet 112 may be stacked in the vertical direction. It may be seen that regardless whether the electrode assembly 11 adopts the wound structure or the laminated structure, the direction in which the electrode assembly 11 applies the largest expansion force to the battery case 12 is toward the vertical direction.

Since the direction in which the electrode assembly 11 applies the largest expansion force to the battery case 12 is toward the vertical direction, and the number of battery cells stacked in the vertical direction is relatively small. As a result, the present disclosure can reduce the largest expansion force of the battery module 100 compared to the existing technologies, and thus a smaller-sized end plate may be selected, thereby increasing the energy density of the battery module 100. Referring to FIG. 7, in the battery module 100, a number of layers of the the battery cells 1 stacked in the vertical direction (the direction indicated by arrow C) may be about 2 layers. In an embodiment of the present disclosure, the number of layers of the battery cells 1 stacked in the vertical direction may be about 1 to 5 layers. In an embodiment of the present disclosure, the number of layers of the battery cells 1 stacked in the vertical direction may be about two layers or three layers.

In order to better balance the expansion force of the battery module 100 in the horizontal direction and vertical direction, in an embodiment of the present disclosure, a ratio of the dimension of the battery module 100 in the horizontal direction to the dimension of the battery module 100 in the vertical direction is greater than or equal to about one, two, three, or four. In an embodiment of the present disclosure, the ratio of the dimension of the battery module 100 in the horizontal direction to the dimension of the battery module 100 in the vertical direction is greater than or equal to about four.

Since the battery cell 1 may generate gas in the battery case 12 during the processes of charging and discharging, the generated gas may exert a force on the battery case 12, which further aggravates the outward expansion of the battery case 12. Due to the area of the first surface 110 in an embodiment of the present disclosure is larger than the area of the second surface 120, and the two first surfaces 110 of the battery cells 1 face each other in the vertical direction, the direction in which the generated gas exerts the largest force on the battery case 12 is also in the vertical direction. Accordingly, the largest expansion force of the battery module 100 can be further reduced.

In the existing technologies, due to a structural limitation of the vehicle chassis, for the vehicle chassis that is used for accommodating the battery pack, the dimension in the vertical direction is much smaller than the dimension in the width direction or the dimension in the horizontal dimension. In an embodiment of the present disclosure, the second surface 120 of the battery cell 1 faces toward the vertical direction (the direction indicated by arrow C), thus the original dimension of the battery cell 1 in the vertical direction is changed to the current dimension in the width direction (the direction indicated by arrow B). As a result, in the case of the same battery cell 1, the dimension of the battery pack in the vertical direction of the vehicle chassis is reduced, and the space of the chassis of a vehicle in the width direction and in the horizontal direction are better utilized, which is more in line with the demand for the battery pack of a new energy vehicle.

Referring to FIG. 7 and FIG. 8, the first electrode terminal 131 and the second electrode terminal 132 on the battery cell 1 are disposed on the first surface 110 of the battery case 12, such that the bus bar 5 connected to the electrode terminals is located on one side of the battery cell 1 where the first surface 110 is located. Since the space of the battery module 100 in the vertical direction is more valuable than the space in other directions, the arrangement of the bus bar on one side of the first surface 110 may allow better utilization of the space on the side of battery module 100, thereby reducing the dimension of the battery module 100 in the vertical direction. In particular, when the battery module 100 is applied in a vehicle, the battery module 100 is usually disposed at the bottom of the vehicle, by means of reducing the dimension of the battery module 100 in the vertical direction, a ground clearance of the bottom of the vehicle can be increased, which helps to improve the vehicle's capacity to overcome obstacles.

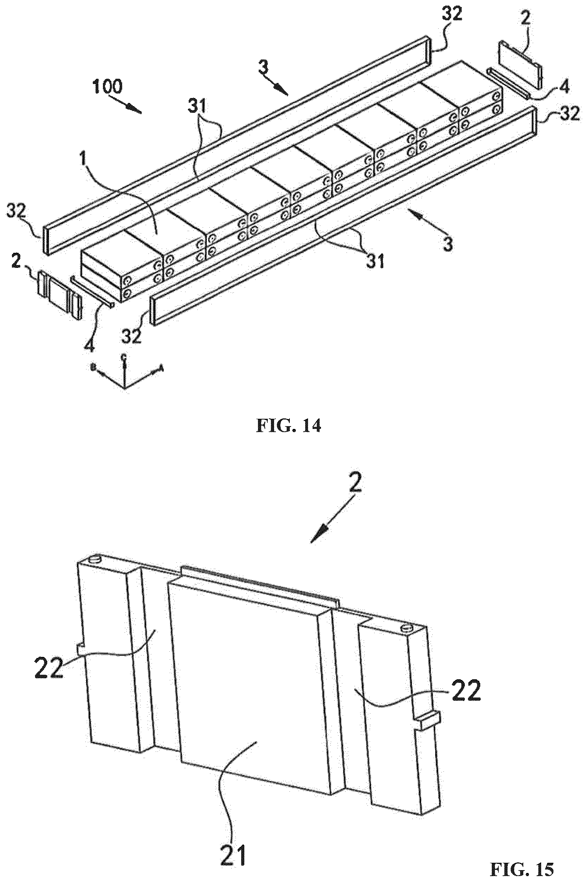

Referring to FIG. 13 and FIG. 14, in an embodiment of the present disclosure, the battery module 100 includes a tying band 3, and the tying band 3 surrounds an outer periphery of a plurality of the battery cells 1, and may be head to tail connected by itself, such that the plurality of the battery cells are tied together. The tying band 3 may be made of a material including, but not limited to, nylon, polypropylene and polyvinyl chloride, which may have good flexibility. In addition, the tying band may surround the plurality of the battery cells 1 to form two long sides 31 and two short sides 32. In an embodiment of the present disclosure, the long side 31 and the first surface 110 may face each other and extend in the horizontal direction (the length direction indicated by arrow A), and the short side 32 and the second surface 120 may face each other and extend in the vertical direction (the direction indicated by arrow C). Since the expansion force of the battery modules 100 in the horizontal direction (for example, the length direction indicated by arrow A) is relatively small, the strength requirement for the fixed structure of the battery cell 1 is accordingly lowered. Thus, the battery cells 1 in the battery modules 100 may be bundled together with the tying band 3. In an embodiment of the present disclosure, the battery modules 100 may be secured by other means including, but not limited to a pressure bar, a side plate, and a bolt. In an embodiment of the present disclosure, the tying band 3 has the advantages of light weight, small occupation size, and so on. Using the tying band 3 to bundle the periphery of the battery cells 1 may reduce the weight of the battery modules 100.

Optionally, the battery modules 100 may be provided with at least two tying bands 3, and the tying bands 3 may be spaced apart in the width direction (the direction indicated by arrow B). In an embodiment of the present disclosure, the number of the tying bands 3 may be one. In an embodiment of the present disclosure, the number of the tying bands 3 may be three, four, or five.

Referring to FIG. 13 and FIG. 14, in an embodiment of the present disclosure, the battery module 100 further includes two end plates 2, and the end plates 2 are respectively disposed at two ends in the horizontal direction of the plurality of the battery cells 1 (for example, the length direction indicated by arrow A). The tying band 3 surrounds the outer periphery of the plurality of the battery cells 1 and the two end plates 2, so as to tie the two end plates 2 and the plurality of the battery cells 1 together. The end plate 2 may be made of a metal material or non-mental material. Exemplary materials may include, but not limited to, aluminum or aluminum alloy, and a polymer material such as plastic through an injection molding process.

Referring to FIG. 14, in an embodiment of the present disclosure, the battery modules 100 further includes an insulation part 4, and the insulation part 4 may be made of an insulating materials including, but not limited to, rubber and silicone. The insulation part 4 includes at least a first surface and a second surface, where the first surface is perpendicular to the second surface. The insulation part 4 is arranged at the bottom of both ends of the battery modules 100 in the length direction, the first surface of the insulation part 4 is opposed to a side surface of the battery cell 1 at one end, and the second surface of the insulation part 4 is opposed to the bottom surface of the battery cell 1. The tying band 3 may surround the outer periphery of the end plates 2, the plurality of the battery cells 1 and the two insulation parts 4, such that the end plates 2, the battery cells 1, and the insulation part 4 are bonded together. The insulation part 4 not only functions for insulation protection, but also prevents the battery cell 1 from being locally tightened by the tying band 3, in which uneven forces may be applied on the battery cell.

Referring to FIG. 15, it shows a schematic structural view of the end plate 2 according to an embodiment of the present disclosure. The end plate 2 includes a main body 21 of the end plate and a tying band limiting slot 22, where the tying band limiting slot 22 is disposed at the outer surface of the end plate 2, and may be formed by means of the outer surface of the end plate 2 recessing inward. The tying band limiting slot 22 extends in the vertical direction. The tying band 3 may pass through the tying band limiting slot 22 such that the short side 32 of the tying band 3 may be received in the tying band limiting slot 22. The tying band 3 surrounds the outer periphery of the plurality of the battery cells 1 and the end plates 2, where a width of the tying band limiting slot 22 may be equivalent to a width of the short side 32 of the tying band 3, such that the position of the tying band 3 may be defined.

While the disclosure has been described in connection with certain embodiments, it is to be understood that the disclosure is not to be limited to the disclosed embodiments but, on the contrary, is intended to cover various modifications within the scope of the claims.

## Claims

1. A battery pack (200), comprising:
a housing (20) comprising an accommodating chamber (250); and
a plurality of battery modules (100) disposed in the accommodating chamber (250) and arranged in a horizontal direction;
each of the battery modules (100) comprising a plurality of battery cells (1) electrically connected to each other by a plurality of first bus bars (5);
each of the battery cells (1) comprising a battery case (12) having a first surface (110), a first and a second electrode terminals (131, 132) disposed on the first surface (110) of the battery case (12);
the plurality of the battery modules (100) comprise a first battery module (100-1) arranged at one end of the battery pack (200) along the horizontal direction, a second battery module (100-2) arranged at the other end of the battery pack (200) along the horizontal direction; and a third battery module (100-3) arranged between the first battery module (100-1) and the second module (100-2);
**characterized in that**,
each of the first and the second electrode terminals (131, 132) of the battery cells (1) in the first battery module (100-1) face toward the second battery module (100-2), and each of the first and the second electrode terminals (131, 132) of the battery cells (1) in the second battery module (100-2) face toward the first battery module (100-1); and
the battery case (12) further having a fourth surface (140) facing the first surface (110);
optionally, the number of the battery modules (100) is an even number, two first surfaces (110) of the battery case (12) in any two adjacent battery modules (100) face each other, or two fourth surfaces (140) of the battery case (12) in any two adjacent battery modules (100) face each other; or,
optionally, the number of the battery modules (100) is an odd number, two first surfaces (110) of the battery case (12) in any two adjacent battery modules (100) except the third battery module (100-3) face each other, or two fourth surfaces (140) of the battery case (12) in any two adjacent battery modules (100) except the third battery module (100-3) face each other.

2. The battery pack according to claim 1, wherein a dimension of the battery case (12) in the horizontal direction is larger than a dimension of the battery case (12) in a vertical direction.

3. The battery pack according to any one of claims 1 to 2, wherein the battery case (12) further having two second surfaces (120) and two third surfaces (130), an area of the second surface (120) is larger than an area of the first surface (110) and also larger than an area of the third surface (130), the two second surfaces (120) face each other in the vertical direction, the two third surfaces (130) face each other in the horizontal direction, and any two of the first surfaces (110), the second surfaces (120), and the third surfaces (130) are connected to each other.

4. The battery pack according to any one of claims 1 to 3, wherein the horizontal direction is a width direction of the battery pack (200), or the horizontal direction is a length direction of the battery pack (200).

5. The battery pack according to claim 1, wherein the first surface (110) of the battery case (12) in the third battery module (100-3) faces the fourth surface (140) of the battery case (12) in an adjacent battery module (100), and the fourth surface (140) of the battery case (12) in the third battery module (100-3) faces the first surface (110) of the battery case (12) in an adjacent battery module (100).

6. The battery pack according to any one of claims 1 to 5, wherein a partition plate (7) is disposed between any two adjacent battery modules (100).

7. The battery pack according to any one of claims 1 to 6, wherein the plurality of battery modules (100) are electrically connected to each other by a plurality of second bus bars (6), and wherein the plurality of the second bus bars (6) are located at the same end of the plurality of battery modules (100).

8. The battery pack according to any one of claims 1 to 7, wherein each of the battery modules (100) further comprises a tying band (3) surrounding an outer periphery of the plurality of battery cells (1), the tying band (3) comprises a long side (31) and a short side (32), the long side (31) faces a top surface or a bottom surface of the battery module (100) and extends in the horizontal direction, and the short side (32) faces a side surface of the battery module (100) and extends in the vertical direction.

9. The battery pack according to any one of claims 1 to 8, wherein each of the battery modules (100) further comprises two end plates (2) respectively disposed at two ends of the plurality of battery cells (1), and the tying band (3) surrounds the outer periphery of the plurality of battery cells (1) and the two end plates (2).

10. The battery pack according to any one of claims 1 to 9, wherein two or three battery cells (1) are stacked in the vertical direction in each of the battery modules (100).

11. A vehicle, comprising:
a vehicle body; and
a battery pack (200) according to any one of claims 1 to 10 disposed at a bottom of the vehicle body;
wherein
a first battery module (100-1) and a second battery module (100-2) in the battery pack (200) are respectively arranged on two sides in a width direction of the vehicle body; or,
a first battery module (100-1) and a second battery module (100-2) in the battery pack are respectively arranged on two sides in a length direction of the vehicle body.

## Patentansprüche

1. Batteriesatz (200), umfassend:
ein Gehäuse (20), umfassend eine Aufnahmekammer (250); und
eine Vielzahl von Batteriemodulen (100), die in der Aufnahmekammer (250) angeordnet und ein einer horizontalen Richtung angeordnet sind;
wobei die Batteriemodule (100) jeweils eine Vielzahl von Batteriezellen (1) umfassen, die durch eine Vielzahl von ersten Sammelschienen (5) miteinander elektrisch verbunden sind;
wobei die Batteriezellen (1) jeweils einen Batteriekasten (12) mit einer ersten Oberfläche (110), einem ersten und einem zweiten Elektrodenanschluss (131, 132), die auf der ersten Oberfläche (110) des Batteriekastens (12) angeordnet sind, umfassen,
wobei die Vielzahl der Batteriemodule (100) Folgendes umfasst: ein erstes Batteriemodul (100-1), das entlang der horizontalen Richtung an einem Ende des Batteriesatzes (200) angeordnet ist, ein zweites Batteriemodul (100-2), das entlang der horizontalen Richtung an dem anderen Ende des Batteriesatzes (200) angeordnet ist, und ein drittes Batteriemodul (100-3), das zwischen dem ersten Batteriemodul (100-1) und dem zweiten Batteriemodul (100-2) angeordnet ist;
**dadurch gekennzeichnet, dass**
der erste und der zweite Elektrodenanschluss (131, 132) der Batteriezellen (1) in dem ersten Batteriemodul (100-1) jeweils dem zweiten Batteriemodul (100-2) gegenüberliegen und der erste und der zweite Elektrodenanschluss (131, 132) der Batteriezellen (1) in dem zweiten Batteriemodul (100-2) jeweils dem ersten Batteriemodul (100-1) gegenüberliegen; und
der Batteriekasten (12) ferner eine vierte Oberfläche (140) aufweist, die der ersten Oberfläche (110) gegenüberliegt;
wobei optional die Zahl der Batteriemodule (100) eine gerade Zahl ist, zwei erste Oberflächen (110) des Batteriekastens (12) in beliebigen zwei benachbarten Batteriemodulen (100) einander gegenüberliegen, oder zwei vierte Oberflächen (140) des Batteriekastens (12) in beliebigen zwei benachbarten Batteriemodulen (100) einander gegenüberliegen; oder wobei optional die Zahl der Batteriemodule (100) eine ungerade Zahl ist, zwei erste Oberflächen (110) des Batteriekastens (12) in beliebigen zwei benachbarten Batteriemodulen (100) außer dem dritten Batteriemodul (100-3) einander gegenüberliegen, oder zwei vierte Oberflächen (140) des Batteriekastens (12) in beliebigen zwei benachbarten Batteriemodulen (100) außer dem dritten Batteriemodul (100-3) einander gegenüberliegen.

2. Batteriesatz nach Anspruch 1, wobei eine Abmessung des Batteriekastens (12) in der horizontalen Richtung größer als eine Abmessung des Batteriekastens (12) in einer vertikalen Richtung ist.

3. Batteriesatz nach einem der Ansprüche 1 bis 2, wobei der Batteriekasten (12) ferner zwei zweite Oberflächen (120) und zwei dritte Oberflächen (130) aufweist, ein Flächeninhalt der zweiten Oberfläche (120) größer als ein Flächeninhalt der ersten Oberfläche (110) und außerdem größer als ein Flächeninhalt der dritten Oberfläche (130) ist, die zwei zweiten Oberflächen (120) einander in der vertikalen Richtung gegenüberliegen, die zwei dritten Oberflächen (130) einander in der horizontalen Richtung gegenüberliegen und beliebige zwei der ersten Oberflächen (110), der zweiten Oberflächen (120) und der dritten Oberflächen (130) miteinander verbunden sind.

4. Batteriesatz nach einem der Ansprüche 1 bis 3, wobei es sich bei der horizontalen Richtung um eine Breitenrichtung des Batteriesatzes (200) handelt oder es sich bei der horizontalen Richtung um eine Längenrichtung des Batteriesatzes (200) handelt.

5. Batteriesatz nach Anspruch 1, wobei die erste Oberfläche (110) des Batteriekastens (12) in dem dritten Batteriemodul (100-3) der vierten Oberfläche (140) des Batteriekastens (12) in einem benachbarten Batteriemodul (100) gegenüberliegt und die vierte Oberfläche (140) des Batteriekastens (12) in dem dritten Batteriemodul (100-3) der ersten Oberfläche (110) des Batteriekastens (12) in einem benachbarten Batteriemodul (100) gegenüberliegt.

6. Batteriesatz nach einem der Ansprüche 1 bis 5, wobei eine Trennplatte (7) zwischen beliebigen zwei benachbarten Batteriemodulen (100) angeordnet ist.

7. Batteriesatz nach einem der Ansprüche 1 bis 6, wobei die Vielzahl von Batteriemodulen (100) durch eine Vielzahl von zweiten Sammelschienen (6) miteinander elektrisch verbunden sind, und wobei sich die Vielzahl der zweiten Sammelschienen (6) an demselben Ende der Vielzahl von Batteriemodulen (100) befinden.

8. Batteriesatz nach einem der Ansprüche 1 bis 7, wobei die Batteriemodule (100) ferner jeweils einen Bindegurt (3) umfassen, der einen Außenumfang der Vielzahl von Batteriezellen (1) umgibt, wobei der Bindegurt (3) eine lange Seite (31) und eine kurze Seite (32) umfasst, die lange Seite (31) einer oberen Oberfläche oder einer unteren Oberfläche des Batteriemoduls (100) gegenüberliegt und sich in der horizontalen Richtung erstreckt und die kurze Seite (32) einer Seitenoberfläche des Batteriemoduls (100) gegenüberliegt und sich in der vertikalen Richtung erstreckt.

9. Batteriesatz nach einem der Ansprüche 1 bis 8, wobei die Batteriemodule (100) ferner jeweils zwei Endplatten (2) umfassen die an einem jeweiligen von zwei Enden der Vielzahl von Batteriezellen (1) angeordnet sind, und der Bindegurt (3) den Außenumfang der Vielzahl von Batteriezellen (1) und der zwei Endplatten (2) umfasst.

10. Batteriesatz nach einem der Ansprüche 1 bis 9, wobei in jedem der Batteriemodule (100) zwei oder drei Batteriezellen (1) in der vertikalen Richtung gestapelt sind.

11. Fahrzeug, umfassend:
eine Fahrzeugkarosserie; und
einen Batteriesatz (200) nach einem der Ansprüche 1 bis 10, der an einem Boden der Fahrzeugkarosserie angeordnet ist,
wobei
ein erstes Batteriemodul (100-1) und ein zweites Batteriemodul (100-2) in dem Batteriesatz (200) in einer Breitenrichtung der Fahrzeugkarosserie auf einer jeweiligen von zwei Seiten angeordnet sind; oder
ein erstes Batteriemodul (100-1) und ein zweites Batteriemodul (100-2) in dem Batteriesatz in einer Längenrichtung der Fahrzeugkarosserie auf einer jeweiligen von zwei Seiten angeordnet sind.

## Revendications

1. Bloc-batterie (200) comprenant :
un boîtier (20) comprenant une chambre de logement (250) ; et
une pluralité de modules de batterie (100) disposés dans la chambre de logement (250) et agencés selon une direction horizontale ;
chacun des modules de batterie (100) comprenant une pluralité de cellules de batterie (1) électriquement connectées les unes aux autres par une pluralité de premières barres omnibus (5) ;
chacune des cellules de batterie (1) comprenant un carter de batterie (12) ayant une première surface (110), des première et seconde bornes d'électrode (131, 132) disposées sur la première surface (110) du carter de batterie (12) ;
la pluralité de modules de batterie (100) comprend un premier module de batterie (100-1) agencé au niveau d'une extrémité du bloc-batterie (200) le long de la direction horizontale, un deuxième module de batterie (100-2) agencé au niveau de l'autre extrémité du bloc-batterie (200) le long de la direction horizontale ; et un troisième module de batterie (100-3) agencé entre le premier module de batterie (100-1) et le deuxième module (100-2) ;
**caractérisé en ce que**
chacune des première et seconde bornes d'électrode (131, 132) des cellules de batterie (1) dans le premier module de batterie (100-1) est orientée vers le deuxième module de batterie (100-2), et chacune des première et seconde bornes d'électrode (131, 132) des cellules de batterie (1) dans le deuxième module de batterie (100-2) est orientée vers le premier module de batterie (100-1) ; et
le carter de batterie (12) présentant en outre une quatrième surface (140) qui fait face à la première surface (110) ;
de manière facultative, le nombre de modules de batterie (100) est un nombre pair, deux premières surfaces (110) du carter de batterie (12) dans deux modules de batterie (100) adjacents quelconques se font face, ou deux quatrièmes surfaces (140) du carter de batterie (12) dans deux modules de batterie (100) adjacents quelconques se font face ; ou,
de manière facultative, le nombre de modules de batterie (100) est un nombre impair, deux premières surfaces (110) du carter de batterie (12) dans deux modules de batterie (100) adjacents quelconques à l'exception du troisième module de batterie (100-3) se font face, ou deux quatrièmes surfaces (140) du carter de batterie (12) dans deux modules de batterie (100) adjacents quelconques à l'exception du troisième module de batterie (100-3) se font face.

2. Bloc-batterie selon la revendication 1, dans lequel une dimension du carter de batterie (12) dans la direction horizontale est plus grande qu'une dimension du carter de batterie (12) dans une direction verticale.

3. Bloc-batterie selon l'une quelconque des revendications 1 à 2, dans lequel le carter de batterie (12) comporte en outre deux deuxièmes surfaces (120) et deux troisièmes surfaces (130), une superficie de la deuxième surface (120) étant plus grande qu'une superficie de la première surface (110) et également plus grande qu'une superficie de la troisième surface (130), les deux deuxièmes surfaces (120) se font face dans la direction verticale, les deux troisièmes surfaces (130) se font face dans la direction horizontale, et deux quelconques des premières surfaces (110), des deuxièmes surfaces (120), et des troisièmes surfaces (130) sont reliées l'une à l'autre.

4. Bloc-batterie selon l'une quelconque des revendications 1 à 3, dans lequel la direction horizontale est une direction de largeur du bloc-batterie (200), ou la direction horizontale est une direction de longueur du bloc-batterie (200).

5. Bloc-batterie selon la revendication 1, dans lequel la première surface (110) du carter de batterie (12) dans le troisième module de batterie (100-3) fait face à la quatrième surface (140) du carter de batterie (12) dans un module de batterie adjacent (100), et la quatrième surface (140) du carter de batterie (12) dans le troisième module de batterie (100-3) fait face à la première surface (110) du carter de batterie (12) dans un module de batterie (100) adjacent.

6. Bloc-batterie selon l'une quelconque des revendications 1 à 5, dans lequel une plaque de séparation (7) est disposée entre deux modules de batterie (100) adjacents quelconques.

7. Bloc-batterie selon l'une quelconque des revendications 1 à 6, dans lequel la pluralité de modules de batterie (100) sont électriquement connectés l'un à l'autre par une pluralité de secondes barres omnibus (6), et dans lequel la pluralité des secondes barres omnibus (6) sont situées au niveau de la même extrémité de la pluralité de modules de batterie (100).

8. Bloc-batterie selon l'une quelconque des revendications 1 à 7, dans lequel chacun des modules de batterie (100) comprend en outre une bande de liaison (3) entourant une périphérie extérieure de la pluralité de cellules de batterie (1), la bande de liaison (3) comprend un bord long (31) et un bord court (32), le bord long (31) fait face à une surface supérieure ou à une surface inférieure du module de batterie (100) et s'étend dans la direction horizontale, et le bord court (32) fait face à une surface latérale du module de batterie (100) et s'étend dans la direction verticale.

9. Bloc-batterie selon l'une quelconque des revendications 1 à 8, dans lequel chacun des modules de batterie (100) comprend en outre deux plaques d'extrémité (2) respectivement disposées au niveau de deux extrémités de la pluralité de cellules de batterie (1), et la bande de liaison (3) entoure la périphérie extérieure de la pluralité de cellules de batterie (1) et les deux plaques d'extrémité (2).

10. Bloc-batterie selon l'une quelconque des revendications 1 à 9, dans lequel deux ou trois cellules de batterie (1) sont empilées dans la direction verticale dans chacun des modules de batterie (100).

11. Véhicule, comprenant :
une carrosserie de véhicule ; et
un bloc-batterie (200) selon l'une quelconque des revendications 1 à 10 disposé au niveau d'un fond de la carrosserie de véhicule ;
dans lequel
un premier module de batterie (100-1) et un deuxième module de batterie (100-2) dans le bloc-batterie (200) sont respectivement agencés sur deux côtés dans une direction de largeur de la carrosserie de véhicule ; ou
un premier module de batterie (100-1) et un deuxième module de batterie (100-2) dans le bloc-batterie sont respectivement agencés sur deux côtés dans une direction de longueur de la carrosserie de véhicule.
